# EUROPÄISCHE PATENTSCHRIFT

(11) **EP 4 098 852 B1**
(45) Veröffentlichungstag und Bekanntmachung des Hinweises auf die Patenterteilung: **13.09.2023**
(21) Anmeldenummer: 22169872.3
(22) Anmeldetag: 26.04.2022
(51) Int. Cl.: F01N 3/027, F01N 3/20, F01N 9/00

(54) **ABGASHEIZER**
EXHAUST HEATER
CHAUFFAGE DE GAZ D'ÉCHAPPEMENT

(30) Priorität: 31.05.2021 DE 102021113989
(43) Veröffentlichungstag der Anmeldung: 07.12.2022
(73) Patentinhaber: Purem GmbH, 66539 Neunkirchen (DE)
(72) Erfinder: Brenner, Holger, Stuttgart (DE)
(74) Vertreter: Ruttensperger Lachnit Trossin Gomoll

(56) Entgegenhaltungen:
- DE-A1-102019 101 603
- JP-U- S6 078 918
- US-A1- 2014 343 747
- US-A1- 2019 331 015

## Beschreibung

Die vorliegende Erfindung betrifft einen Abgasheizer für eine Abgasanlage für eine Brennkraftmaschine sowie ein mit einem derartigen Abgasheizer aufgebautes Abgasheizsystem und eine Abgasanlage mit einem derartigen Abgasheizer bzw. Abgasheizsystem. Die Erfindung betrifft ferner ein Verfahren zum Betreiben eines derartigen Abgasheizers.

Aus der nachveröffentlichten deutschen Patentanmeldung DE 10 2020 123 376 ist ein Abgasheizer bekannt, welcher einen Heizleiter mit einem zwischen zwei Versorgungsspannungsanschlüssen verlaufenden, in einer Abgasanlage von Abgas umströmbaren Heizbereich aufweist. Der Heizleiter des Abgasheizers ist durch Heraustrennen aus einem Metall-Flachmaterial bereitgestellt. Durch Anlegen einer elektrischen Spannung zwischen den Versorgungsspannungsanschlüssen und den bei Anlegen der elektrischen Spannung zwischen den Versorgungsspannungsanschlüssen fließenden elektrischen Strom entsteht aufgrund der im Wesentlichen durch das Produkt aus elektrischer Spannung und elektrischem Strom definierten Heizleistung Wärme, die zumindest teilweise auf das den Heizleiter bzw. dessen Heizbereich umströmende Abgas übertragen wird.

Aus der US 2014/0343747 A1 ist ein Abgasheizer bekannt, bei welchem in Zuordnung zu einem Heizleiter ein oder mehrere als Thermoelemente aufgebaute Temperatursensoren vorgesehen sind, durch welche Information über die Temperatur im Bereich des Heizleiters bereitgestellt werden kann.

Es ist die Aufgabe der vorliegenden Erfindung, einen Abgasheizer und ein Verfahren zum Betreiben eines Abgasheizers bereitzustellen, mit welchen eine verbesserte Anpassbarkeit des Heizbetriebs an Umgebungsbedingungen, wie zum Beispiel die Temperatur von den Heizleiter umströmendem Abgas, erreicht werden kann.

Erfindungsgemäß wird diese Aufgabe gelöst durch einen Abgasheizer für eine Abgasanlage für eine Brennkraftmaschine gemäß Anspruch 1. Der Abgasheizer umfasst einen Heizleiter mit einem ersten Versorgungsspannungsanschluss, einem zweiten Versorgungsspannungsanschluss und einem zwischen dem ersten Versorgungsspannungsanschluss und dem zweiten Versorgungsspannungsanschluss verlaufenden Heizbereich, ferner umfassend eine in den Heizbereich integrierte Spannungsmessstrecke.

Durch das Bereitstellen einer derartigen Spannungsmessstrecke am Heizleiter bzw. am Heizbereich des Heizleiters wird die Möglichkeit geschaffen, durch Abgreifen bzw. Erfassen der an der Spannungsmessstrecke abfallenden elektrischen Spannung aufgrund des im Allgemeinen bekannten Zusammenhangs zwischen der elektrischen Spannung und dem elektrischen Widerstand sowie des im Allgemeinen bekannten Zusammenhangs zwischen dem elektrischen Widerstand und der Temperatur der Spannungsmessstrecke, die Temperatur im Bereich der Spannungsmessstrecke zu ermitteln und somit auch die Temperatur des Heizbereichs zu ermitteln, von welcher grundsätzlich angenommen werden kann, dass sie im Wesentlichen auch der Temperatur der Spannungsmessstrecke entspricht. Somit kann Information über die Temperatur des Heizleiters in dem von Abgas umströmten bzw. umströmbaren Bereich des Heizbereichs desselben bereitgestellt werden. Es besteht somit die Möglichkeit, durch Verändern der Versorgungsspannung und damit auch Verändern der am Heizleiter entstehenden Heizleistung die Temperatur des Heizleiters in einen gewünschten Bereich zu bringen oder im Bereich eines Soll-Wertes zu halten.

Die Spannungsmessstrecke umfasst einen Messwiderstand, wobei ein erster Anschlussbereich des Messwiderstands an einen zu dem ersten Versorgungsspannungsanschluss führenden ersten Heizbereichsabschnitt angeschlossen ist und ein zweiter Anschlussbereich des Messwiderstands an einen zu dem zweiten Versorgungsspannungsanschluss führenden zweiten Heizbereichsabschnitt angeschlossen ist, wobei der Messwiderstand zu dem ersten Heizbereichsabschnitt und dem zweiten Heizbereichsabschnitt elektrisch seriell geschaltet ist.

Bei dieser erfindungsgemäßen Ausgestaltung ist der Heizleiter im Bereich der Spannungsmessstrecke unterbrochen, so dass zwei durch die Spannungsmessstrecke körperlich voneinander getrennte, über diese aber elektrisch leitend miteinander verbundene Heizbereichsabschnitte des Heizbereichs vorhanden sind. Das Integrieren einer derartigen Messstrecke in Form eines als separates Bauteil ausgeführten Messwiderstands in den Heizleiter bzw. den Heizbereich desselben bietet die Möglichkeit, für den Messwiderstand ein Material zu verwenden, welches in dem zu berücksichtigenden Betriebstemperaturbereich, also dem Temperaturbereich, in welchem ein derartiger Abgasheizer im Allgemeinen betrieben wird, eine exakte Erfassung der Messspannung bzw. eine exakte Ermittlung des elektrischen Widerstandes und somit auch der im Bereich der Messstrecke vorhandenen Temperatur ermöglicht.

Um den Messwiderstand zur Erfassung eines Spannungsabfalls besonders effizient nutzen zu können, wird vorgeschlagen, dass bei dem zu dem ersten Heizbereichsabschnitt und dem zweiten Heizbereichsabschnitt elektrisch seriell geschaltetem Messwiderstand ein erster Spannungsmessanschluss an dem Messwiderstand im Bereich des ersten Anschlussbereichs gebildet ist und ein zweiter Spannungsmessanschluss an dem Messwiderstand im Bereich des zweiten Anschlussbereichs gebildet ist.

Für eine erhöhte Genauigkeit bei der Erfassung der zwischen den Spannungsmessanschlüssen abfallenden elektrischen Spannung kann die Spannungsmessstrecke eine von der Widerstandscharakteristik des Heizbereichs sich unterscheidende Widerstandscharakteristik aufweisen. Dies bietet insbesondere die Möglichkeit, für den Heizleiter bzw. dessen Heizbereich ein Aufbaumaterial zu verwenden, welches in dem Temperaturbereich, in welchem ein derartiger Abgasheizer bzw. dessen Heizleiter im Allgemeinen betrieben wird, nur eine vergleichsweise geringe Abhängigkeit des elektrischen Widerstandes von der Temperatur aufweist.

In einem derartigen Betriebstemperaturbereich kann vorteilhafterweise die Spannungsmessstrecke einen sich stärker temperaturabhängig ändernden elektrischen Widerstand aufweisen als der Heizbereich. Dies bedeutet, dass ein Betrag eines Gradienten eines Widerstand-Temperatur-Zusammenhangs bei der Spannungsmessstrecke größer ist, als bei dem Heizleiter. Alternativ oder zusätzlich können derartige unterschiedliche Widerstandscharakteristiken vorsehen, dass in dem Betriebstemperaturbereich die Spannungsmessstrecke einen geringeren elektrischen Widerstand aufweist als der Heizbereich. Dies stellt sicher, dass aufgrund des geringeren elektrischen Widerstandes ein im Vergleich zum Heizbereich geringerer Spannungsabfall und dementsprechend auch eine geringere Heizleistung in der Messstrecke auftreten wird, so dass deren Temperatur primär bestimmt sein kann durch die Temperatur des mit dieser in Wärmeübertragungskontakt stehenden Heizbereichs.

Bei einer besonders vorteilhaften und eine starke Temperaturabhängigkeit des elektrischen Widerstandes aufweisenden Ausgestaltung kann die Spannungsmessstrecke eine PTC-Widerstandscharakteristik oder eine NTC-Widerstandscharakteristik aufweisen. Derartige Widerstandscharakteristiken zeichnen sich dadurch aus, dass, anders als beispielsweise bei Metallen, diese in einem für den Betrieb eines Abgasheizers besonders relevanten Temperaturbereich keinen linearen, sondern einen exponentiellen Zusammenhang zwischen Temperatur und elektrischem Widerstand aufweisen. Dies bedeutet, dass bereits vergleichsweise geringe Temperaturänderungen eine starke Änderung des durch Abgreifen einer elektrischen Spannung erfassbaren elektrischen Widerstands bewirken. Der Einsatz von Aufbaumaterial mit einer PTC-Widerstandscharakteristik bietet insbesondere dann, wenn die Spannungsmessstrecke zu dem Heizleiter seriell geschaltet ist, den weiteren Vorteil, dass mit dem exponentiellen Anstieg des elektrischen Widerstandes bei vergleichsweise hohen Temperaturen ein Selbstregulierungseffekt der Heizleistung und somit ein Überhitzungsschutz für den Heizleiter bereitgestellt werden kann.

Die Erfindung betrifft ferner ein Abgasheizsystem für eine Abgasanlage für eine Brennkraftmaschine, umfassend wenigstens einen von Abgas durchströmbaren Abgasheizer mit erfindungsgemäßem Aufbau und eine Ansteueranordnung zum Erfassen einer Messspannung zwischen einem ersten Spannungsmessanschluss und einem zweiten Spannungsmessanschluss und zum Anlegen einer Versorgungsspannung zwischen dem ersten Versorgungsspannungsanschluss und dem zweiten Versorgungsspannungsanschluss in Abhängigkeit von der erfassten Messpannung.

Die Ansteueranordnung kann dazu ausgebildet, die zwischen dem ersten Versorgungsspannungsanschluss und dem zweiten Versorgungsspannungsanschluss anzulegende Versorgungsspannung in Abhängigkeit von der erfassten Messpannung und einer Soll-Messspannung oder einer Soll-Temperatur im Bereich der Messstrecke anzulegen. Es kann also eine Spannungsregelung vorgesehen werden, welche dafür sorgt, dass eine auf der Grundlage der erfasste Messpannung, also einer Ist-Spannung, ermittelte Temperatur der Messstrecke im Bereich einer Soll-Temperatur liegt bzw. abhängig von der Regelstrategie um diese schwankt und somit nur in einem im Wesentlichen von der vorgesehenen Regelstrategie abhängigen Ausmaß von der Soll-Temperatur abweicht. Die Soll-Temperatur bzw. die einer bestimmten Soll-Temperatur entsprechende Soll-Messspannung kann beispielsweise abhängig von Umgebungsparametern, wie zum Beispiel der Abgastemperatur von den Abgasheizer durchströmendem Abgas, vorgegeben werden.

Die Erfindung betrifft ferner eine Abgasanlage für eine Brennkraftmaschine, umfassend ein Abgasheizsystem mit wenigstens einem erfindungsgemäß aufgebauten Abgasheizer.

Die eingangs angegebene Aufgabe wird weiter gelöst durch ein Verfahren zum Betreiben eines erfindungsgemäß aufgebauten Abgasheizers, vorzugsweise in einem Abgasheizsystem mit wenigstens einem erfindungsgemäß aufgebauten Abgasheizer oder in einer ein derartiges Abgasheizsystem enthaltenden Abgasanlage, umfassend die Maßnahmen:
a) Anlegen einer Versorgungsspannung zwischen dem ersten Versorgungsspannungsanschluss und dem zweiten Versorgungsspannungsanschluss,
b) Erfassen einer Messspannung zwischen einem ersten Spannungsmessanschluss und einem zweiten Spannungsmessanschluss,
c1) Vergleichen der bei der Maßnahme b) erfassten Messspannung mit einer Soll-Messspannung zum Ermitteln einer Spannungsabweichung zwischen der erfassten Messspannung und der Soll-Messspannung und Einstellen der Versorgungsspannung in Abhängigkeit von der Spannungsabweichung derart, dass die erfasste Messspannung im Bereich der Soll-Messspannung liegt,
   oder
c2) Vergleichen einer auf der Grundlage der bei der Maßnahme b) erfassten Messspannung ermittelten Temperatur mit einer Soll-Temperatur zum Ermitteln einer Temperaturabweichung zwischen der ermittelten Temperatur und der Soll-Temperatur und Einstellen der Versorgungsspannung in Abhängigkeit von der Temperaturabweichung derart, dass die ermittelte Temperatur im Bereich der Soll-Temperatur liegt.

Es ist darauf hinzuweisen, dass aufgrund des Zusammenhangs zwischen der erfassten Messpannung und dem elektrischen Widerstand der Messstrecke bzw. der Temperatur der Messstrecke das Erfassen der Messpannung die Grundlage bildet für das Ermitteln des elektrischen Widerstandes der Messstrecke und somit der Temperatur der Messstrecke. Das Einstellen bzw. Einregeln der Messpannung führt somit zu einem Einstellen bzw. Einregeln des elektrischen Widerstandes und somit der Temperatur der Messstrecke und damit im Wesentlichen auch der Temperatur des Heizleiters.

Bei der Maßnahme c2) kann die Temperatur im Bereich der Messstrecke unter Verwendung eines Messspannung-Temperatur-Zusammenhangs ermittelt werden. Dieser Zusammenhang kann beispielsweise in Form eines Kennfeldes oder eines funktionalen Zusammenhangs hinterlegt sein, so dass in Zuordnung zu jedem Wert der Messspannung durch Auslesen aus dem Kennfeld oder durch Berechnung anhand eines funktionalen Zusammenhangs die durch diese jeweilige Messspannung repräsentierte Temperatur ermittelt und gewünschtenfalls mit einer Soll-Temperatur verglichen werden kann.

Die Soll-Temperatur bzw. die eine Soll-Temperatur repräsentierende Soll-Messspannung kann bevorzugt in Abhängigkeit von Umgebungsparametern, wie zum Beispiel der Temperatur von einen Abgasheizer durchströmendem Abgas, vorgegeben werden.

Die Erfindung wird nachfolgend mit Bezug auf die beiliegenden Figuren detailliert beschrieben. Es zeigt:
- Fig. 1: einen erfindungsgemäß aufgebauten Abgasheizer mit einer an einer Trägeranordnung getragenen Heizleiter und einer in den Heizleiter integrierten Spannungsmessstrecke;
- Fig. 2: eine der Fig. 1 entsprechende Ansicht eines nicht erfindungsgemäß aufgebauten Abgasheizers, in welcher zwei verschiedene alternative Ausgestaltungen einer in den Heizleiter integrierten Spannungsmessstrecke dargestellt sind;
- Fig. 3: einen Zusammenhang zwischen der Temperatur und dem elektrischen Widerstand für den Heizleiter und einen Messwiderstand einer Spannungsmessstrecke mit PTC-Widerstandscharakteristik;
- Fig. 4: eine Seitenansicht eines Heizleiters mit einer in der linken Hälfte der Fig. 2 dargestellten Spannungsmessstrecke;
- Fig. 5: eine Seitenansicht eines Heizleiters mit einer in der rechten Hälfte der Fig. 2 dargestellten Spannungsmessstrecke;
- Fig. 6: in prinzipartiger Darstellung eine Abgasanlage mit einem Abgasheizer und einer in den Abgasheizer integrierten Spannungsmessstrecke.

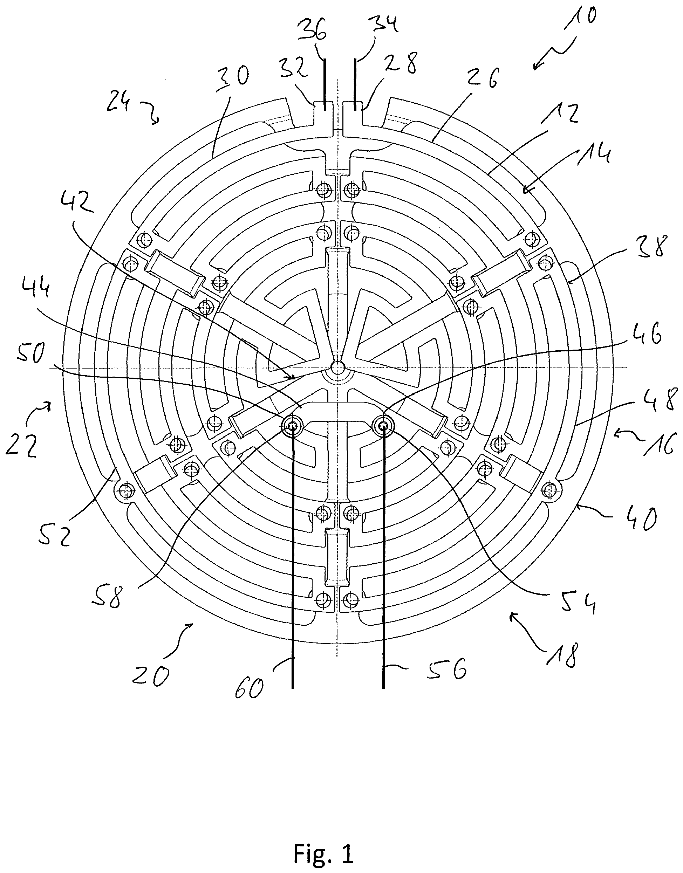

In Fig. 1 ist ein gemäß den Prinzipien der vorliegenden Erfindung aufgebauter Abgasheizer 10 dargestellt, wie dieser hinsichtlich seines prinzipiellen Aufbaus beispielsweise in der nachveröffentlichten deutschen Patentanmeldung DE 10 2020 123 376 beschrieben ist. Der Abgasheizer 10 umfasst einen beispielsweise durch Heraustrennen aus einer Metallplatte gebildeten Heizleiter 12, welcher in dem dargestellten Aufbau mit sechs in Umfangsrichtung um einen Zentralbereich aufeinanderfolgenden Mäander-Windungsfeldern 14, 16, 18, 20, 22, 24 aufgebaut ist. In jedem der Mäander-Windungsfelder 14, 16, 18, 20, 22, 24 liegen jeweilige Mäander-Windungsabschnitte zueinander radial gestaffelt und sind mit einem in radialer Richtung jeweils folgenden Mäander-Windungsabschnitt in einem ihrer Umfangsendbereiche verbunden.

An dem Mäander-Windungsfeld 12 stellt der radial äußerste Mäander-Windungsabschnitt 26 in einem seiner Umfangsendbereiche einen ersten Versorgungsspannungsanschluss 28 bereit. Entsprechend stellt ein radial äußerster Mäander-Windungsabschnitt 30 des Mäander-Windungsfeldes 24 in einem seiner Umfangsendbereiche einen zweiten Versorgungsspannungsanschluss 32 bereit. An die beiden Versorgungsspannungsanschlüsse 28, 30 können jeweilige Spannungsversorgungsleitungen 34, 36 angeschlossen werden, die durch eine abgasdichte Durchführung in einem den Abgasheizer 10 enthaltenden, beispielsweise rohrartigen Abgasführungselement hindurchgeführt sein können.

Zwischen den beiden Versorgungsspannungsanschlüssen 28, 30 weist der Heizleiter 12 einen allgemein mit 38 bezeichneten Heizbereich auf, welcher bei Anlegen einer elektrischen Spannung an die Versorgungsspannungsanschlüsse 28, 30 aufgrund des dabei fließenden elektrischen Stroms erwärmt wird und somit Wärme auf den Heizbereich 38 umströmendes Abgas übertragen kann.

Der Heizleiter 12 bzw. der Heizbereich 38 desselben ist an einer Trägeranordnung 40 getragen, welche beispielsweise an einer stromaufwärtigen Seite und einer stromabwärtigen Seite des Heizleiters 12 jeweils eine Trägerscheibe umfassen kann, die radial außen an das beispielsweise rohrartige Abgasführungselement angebunden sind.

Es ist darauf hinzuweisen, dass die Struktur bzw. der Verlauf des Heizbereichs 38 mit den Mäander-Windungsfeldern 14, 16, 18, 20, 22, 24 nur beispielhaft ist. Der Heizbereich könnte auch eine andere Struktur, beispielsweise einen spiralartigen Verlauf, aufweisen.

In den Heizbereich 38 des Heizleiters 12 ist eine allgemein mit 42 bezeichnete Messstrecke integriert. Die Messstrecke 42 umfasst in dem in Fig. 1 dargestellten Ausgestaltungsbeispiel einen Messwiderstand 44, welcher in einem ersten Anschlussbereich 46 beispielsweise durch Verschrauben, Vernieten, Verlöten, Verschweißen oder dergleichen an einen zu den ersten Versorgungsspannungsanschluss 28 führenden ersten Heizbereichsabschnitt 48 angeschlossen ist und in einen zweiten Anschlussbereich 50 in gleicher Art und Weise an einen zu dem zweiten Versorgungsspannungsanschluss 32 führenden zweiten Heizbereichsabschnitt 52 angeschlossen ist. Der Heizbereich 38 ist somit mit seinen beiden Heizbereichsabschnitten 48, 50 mit zwei grundsätzlich voneinander körperlich getrennten Abschnitten aufgebaut, die jedoch durch den an diese angeschlossenen und somit zu diesen elektrisch seriell geschalteten Messwiderstand 44 miteinander elektrisch leitend verbunden sind.

Im Bereich des ersten Anschlussbereichs 46 ist ein erster Spannungsmessanschluss 54 bereitgestellt, an welchen eine erste Spannungsmessleitung 56 angeschlossen ist. Gleichermaßen ist im Bereich des zweiten Anschlussbereichs 50 ein zweiter Spannungsmessanschluss 58 bereitgestellt, an welchen eine zweite Spannungsmessleitung 60 angeschlossen ist. Auch die Spannungsmessleitungen 56, 60 können durch eine abgasdichte Durchführung durch das Abgasführungselement hindurchgeführt sein.

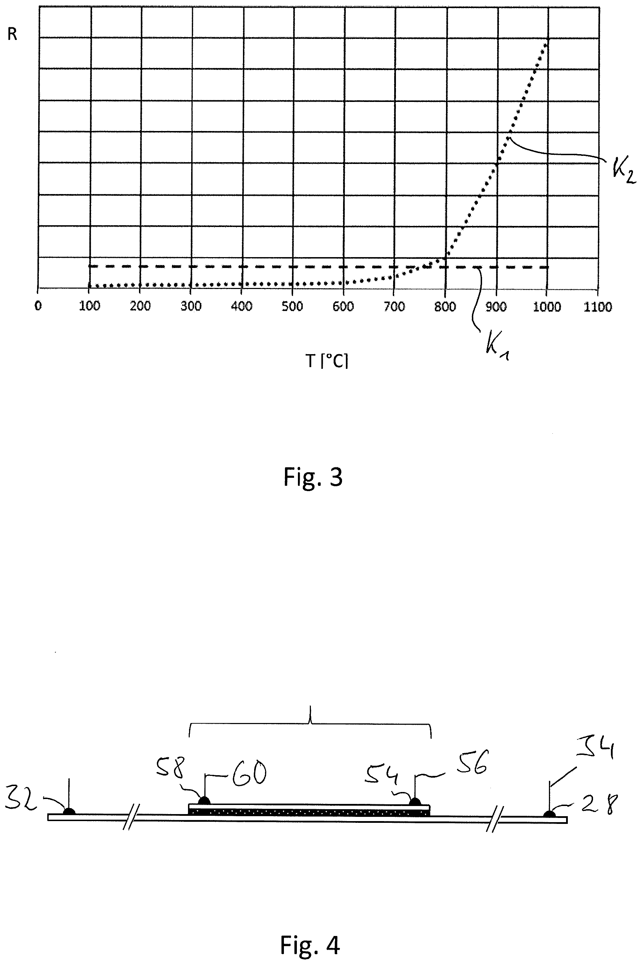

Der Messwiderstand 44 der Spannungsmessstrecke 42 weist vorzugsweise eine Widerstandscharakteristik auf, welche sich von der Widerstandscharakteristik des Heizleiters 12 unterscheidet. Der Heizleiter 12 ist beispielsweise mit einem Metallmaterial aufgebaut, welches grundsätzlich einen vergleichsweise kleinen Widerstand aufweist und in dem Temperaturbereich, in welchem der Abgasheizer 10 zu betreiben ist, also bis zu einer Temperatur von etwa 700°C bis 800°C, einen näherungsweise konstanten und nur leicht ansteigenden elektrischen Widerstand aufweist. Der Messwiderstand 44 kann beispielsweise ein PTC-Element mit einer PTC-Widerstandscharakteristik sein. Die Widerstandscharakteristiken des Heizleiters 12 und des als PTC-Element ausgebildeten Messwiderstands 44 sind in Fig. 3 in prinzipartiger Weise veranschaulicht. Zu erkennen ist anhand einer Kurve K₁ der elektrische Widerstand des Heizleiters 12, welcher sich in einem vergleichsweise großen Temperaturbereich nur wenig ändert. Die Kurve K₂ veranschaulicht in prinzipieller Weise eine PTC-Widerstandscharakteristik des Messwiderstands 44. Diese zeichnet sich dadurch aus, dass sie in einem großen Temperaturbereich, insbesondere den für den normalen Betrieb des Abgasheizers 10 relevanten Temperaturbereich, einen deutlich geringeren elektrischen Widerstand zeigt, als beispielsweise der Heizleiter 12, jedoch eine stärkere Abhängigkeit des elektrischen Widerstands von der Temperatur aufweist. Mit zunehmender Temperatur steigt der elektrische Widerstand des Messwiderstands 44 exponentiell an und übersteigt somit auch den elektrischen Widerstand des Heizleiters 12.

Mit einer derartigen Temperatur-Widerstand-Charakteristik des Heizleiters 12 einerseits und des Messwiderstands 44 andererseits werden verschiedene Vorteile erreicht. Einerseits wird durch den vergleichsweise geringen elektrischen Widerstand des Messwiderstands 44 bzw. der Messstrecke 42 in demjenigen Temperaturbereich, in welchem der Abgasheizer 10 normalerweise betrieben wird, dafür gesorgt, dass in dem zu den beiden Heizbereichsabschnitten 48, 52 seriell geschalteten Messwiderstands 44 nur ein vergleichsweise geringer Spannungsabfall und somit auch eine vergleichsweise geringe Heizleistung auftritt. Der Messwiderstand 44 erzeugt somit selbst vergleichsweise wenig Wärme, so dass dessen Temperatur im Wesentlichen bestimmt sein wird durch die Temperatur des Heizleiters 12 bzw. der beiden mit dem Messwiderstand 44 körperlich verbundenen Heizbereichsabschnitte 48, 52. Andererseits ändert sich der elektrische Widerstand des Messwiderstands 44 mit der Temperatur vergleichsweise stark, so dass bereits vergleichsweise geringe Temperaturänderungen zu einer deutlichen Änderung des elektrischen Widerstands und somit der am Messwiderstand 44 abfallenden elektrischen Spannung führt. Dieser Spannungsabfall kann als Messspannung über die Spannungsmessleitungen 56, 60 erfasst werden und gibt somit einen unmittelbaren Rückschluss auf die Temperatur des Messwiderstands 44 und somit im Wesentlichen auch die Temperatur des an diesen anschließenden Heizbereichs 38.

Ein weiterer Vorteil der PTC-Widerstandscharakteristik des Messwiderstands 44 ist, dass bei übermäßig stark ansteigender Temperatur auch der elektrische Widerstand des Messwiderstands 44 stark ansteigt. Ein stark ansteigender elektrischer Widerstand des Messwiderstands 44 hat aufgrund der seriellen Schaltung des Messwiderstands 44 zu den beiden Heizbereichsabschnitten 48, 52 zur Folge, dass auch durch diese ein vergleichsweise geringer Strom fließen wird mit der Folge, dass die Heizleistung des gesamten Abgasheizers 10 bei übermäßig stark ansteigender Temperatur gedrosselt wird. Mit dieser Widerstandscharakteristik kann also ein Selbstregulierungseffekt erreicht werden, welcher dafür sorgt, dass aufgrund des stark zunehmenden elektrischen Widerstands mit ansteigender Temperatur die Heizleistung entsprechend abnimmt. Beispielsweise kann durch die Auswahl des Aufbaumaterials des Messwiderstands 44 vorgehen sein, dass bei einem Betriebstemperaturbereich, welcher bis zu etwa 700°C bis 800°C reicht, bei weiterem Anstieg der Temperatur im Bereich der Messstrecke 42 ein derart starker Anstieg des elektrischen Widerstands des Messwiderstands 44 auftritt, dass die Heizleistung des Abgasheizers 10 bei einer Temperatur von etwa 900°C nur noch sehr gering ist, beispielsweise bei nahezu Null liegt.

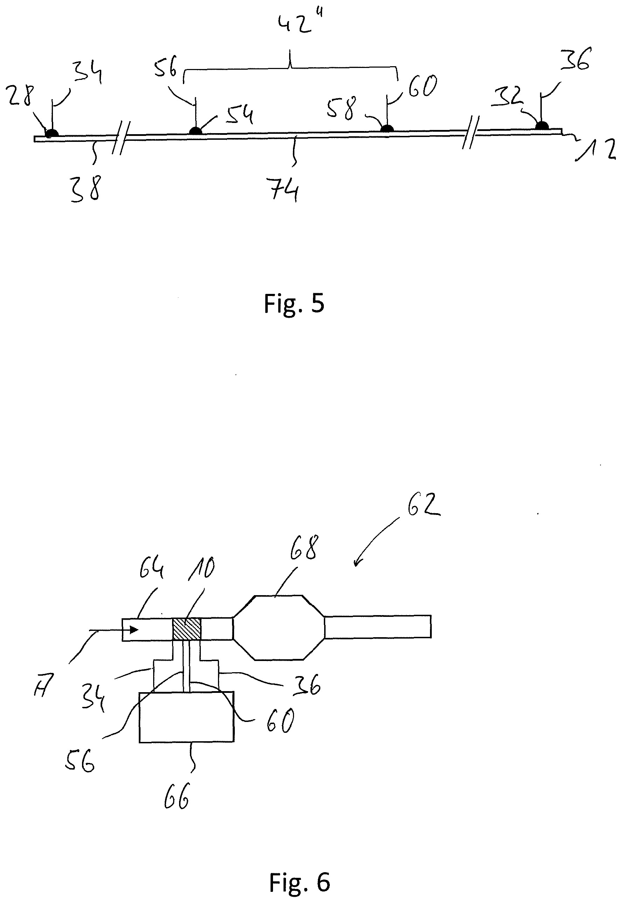

Die Fig. 6 veranschaulicht eine allgemein mit 62 bezeichnete Abgasanlage für eine Brennkraftmaschine beispielsweise in einem Kraftfahrzeug. Die Abgasanlage 62 umfasst ein rohrartiges Abgasführungselement 64, in welcher Abgas A auf den in dem Abgasführungselement 44 angeordneten Abgasheizer 10 zu strömt. Dessen Versorgungsspannungsanschlüsse 28, 32 sind über die Versorgungsleitungen 34, 36 an eine Ansteueranordnung 66 angeschlossen, so dass durch die Ansteueranordnung 66 beispielsweise auf der Grundlage der in einem Fahrzeug vorhandenen Bordspannung eine Versorgungsspannung an die Versorgungsspannungsanschlüsse 28, 32 des Heizleiters 12 angelegt werden kann.

Auch die Spannungsmessanschlüsse 54, 58 bzw. die von diesen weg führenden Spannungsmessleitungen 56, 60 sind an die Ansteueranordnung 66 angeschlossen, so dass in der Ansteueranordnung 66 der Spannungsabfall am Messwiderstand 44 erfasst werden kann. Durch einen in der Ansteueranordnung 66 beispielsweise in Form eines Kennfeldes oder eines funktionalen Zusammenhangs hinterlegten Zusammenhang zwischen dem Spannungsabfall zwischen den beiden Spannungsmessanschlüssen 54, 58, also der am Messwiderstand 44 erfassten Messspannung, und dem elektrischen Widerstand des Messwiderstands 44 bzw. einer durch den elektrischen Widerstand des Messwiderstands 44 repräsentierten Temperatur im Bereich des Messwiderstands 44 bzw. der Messstärke 42 wird es somit möglich, Information über diese Temperatur bzw. allgemein die Temperatur im Bereich des Heizbereichs 38 des Heizleiters 12 bereitzustellen.

Die Ansteueranordnung 66 kann dazu ausgebildet sein, die Temperatur des Heizbereichs 38 bzw. des Abgasheizers 10 auf eine beispielsweise von der Abgastemperatur abhängige Soll-Temperatur einzustellen bzw. einzuregeln. Dies kann beispielsweise dadurch erfolgen, dass auf der Grundlage der am Messwiderstand 44 erfassten Messspannung und des bekannten Zusammenhangs zwischen dieser Messspannung und dem elektrischen Widerstand des Messwiderstands 44 und somit der Temperatur im Bereich des Messwiderstands 44 eine Ist-Temperatur im Bereich des Messwiderstands 44 ermittelt wird und mit der Soll-Temperatur verglichen wird. In Abhängigkeit der Abweichung zwischen der Ist-Temperatur und der Soll-Temperatur kann dann die an die Versorgungsspannungsanschlüsse 28, 32 angelegte Versorgungsspannung verändert werden, um somit in einer Regelprozedur dafür zu sorgen, dass die Ist-Temperatur im Bereich der Soll-Temperatur liegt.

Da zwischen dem Spannungsabfall am Messwiderstand 44, also der Messspannung, und dem elektrischen Widerstand des Messwiderstands 44 und somit auch der Temperatur im Bereich des Messwiderstands 44 ein unmittelbarer Zusammenhang besteht, ist es jedoch nicht zwingend erforderlich, die Messspannung in eine Temperatur umzurechnen. Vielmehr kann in der Ansteueranordnung 46 auch eine Soll-Messspannung vorgegeben werden, die beispielsweise abhängig von der Abgastemperatur verändert werden kann. Diese Soll-Messspannung kann mit der am Messwiderstand 44 erfassten Messspannung, also einer Ist-Messspannung, verglichen werden, so dass auch dann in Abhängigkeit vom Wert zwischen der Soll-Messspannung und der Ist-Messspannung die an die Versorgungspannungsanschlüsse 28, 32 angelegte Versorgungsspannung verändert werden kann, um dafür zu sorgen, dass der Abgasheizer 10 mit einer beispielsweise für eine jeweils vorliegende Abgastemperatur oder beispielsweise eine Temperatur im Bereich einer in der Abgasströmungsrichtung auf den Abgasheizer 10 folgenden Abgasbehandlungseinheit 68, z. B. einer Katalysatoranordnung, optimalen Heizleistung betrieben werden kann.

Es ist weiter darauf hinzuweisen, dass das Vorgeben einer Soll-Messspannung bzw. das Vorgeben einer Soll-Messtemperatur gleichbedeutend ist mit dem Vorgeben eines Soll-Widerstandes für den Messwiderstand 44. Auf der Grundlage der Messspannung kann aufgrund des allgemein bekannten Zusammenhangs des Spannungsabfalls am Messwiderstand 44 mit dessen elektrischem Widerstand durch Verändern der Versorgungsspannung an den Versorgungsspannungsanschlüssen 28, 32 der elektrische Widerstand des Messwiderstands 44 so eingestellt werden, dass er dem Soll-Widerstand entspricht. Da Messspannung, elektrischer Widerstand des Messwiderstands 44 und Temperatur im Bereich des Messwiderstands 44 einander entsprechende bzw. miteinander in einem eindeutigen Zusammenhang stehende physikalische Größen sind, kann jede dieser Größen als Grundlage für die Temperaturerfassung bzw. Temperaturregelung herangezogen werden bzw. bedeutet die Verwendung einer dieser Größen als Regelgröße gleichermaßen auch, dass die mit dieser eindeutig zusammenhängenden anderen Größen eine Grundlage für die Einstellung bzw. Regelung der Temperatur des Abgasheizers 10 bilden.

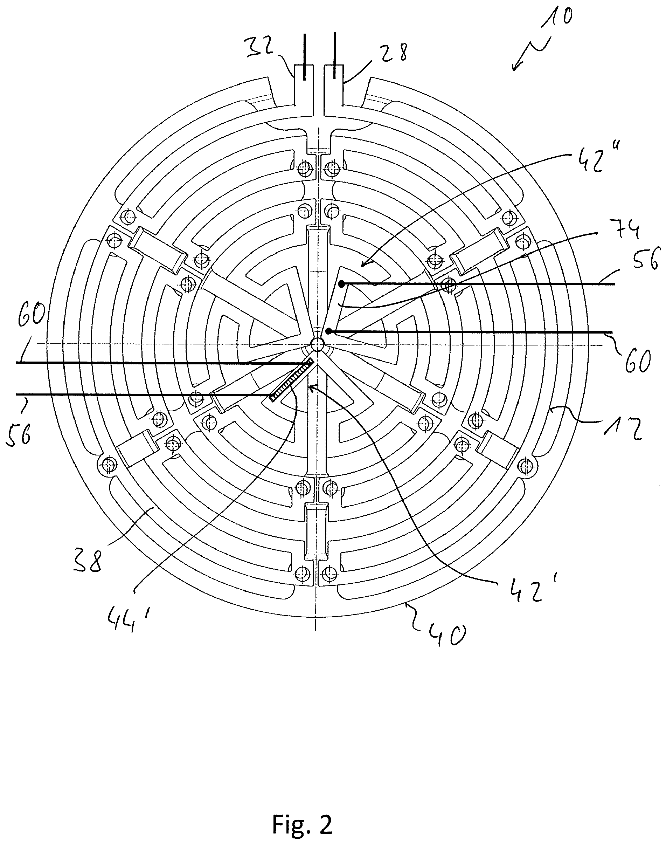

In Fig. 2 sind nicht erfindungsgemäße Ausgestaltungen des Abgasheizers 10 insbesondere mit zwei alternativ ausgestalteten Messstrecken 42' und 42" dargestellt. Bei der in Fig. 2 links dargestellten Ausgestaltung der Messstrecke 42, welche in prinzipieller Weise auch in Fig. 4 veranschaulicht ist, umfasst diese einen nicht körperlich in den Heizbereich 38 des Heizleiters 12 eingebauten Messwiderstand 44', sondern einen entlang eines Abschnitts 70 des Heizbereichs 38 sich erstreckenden und durch Isoliermaterial 72 bezüglich des Heizbereichs 38 elektrisch isolierten Messwiderstand 44. Über das elektrisch isolierende Isoliermaterial 72 ist jedoch der Messwiderstand 44' in Wärmeübertragungskontakt mit dem Heizbereich 38 des Heizleiters 12. Dieses Isoliermaterial 72 kann beispielsweise temperaturbeständiger Klebstoff oder, bei in einer isolierenden Umhüllung enthaltenem Messwiderstand 44', auch Lötmaterial oder Schweißmaterial umfassen.

An den beiden Enden des Messwiderstands 44' sind Spannungsmessanschlüsse 54, 58 gebildet, an welchen die Spannungsmessleitungen 56, 60 angeschlossen sind. Über die Spannungsmessleitungen 56, 60 kann der am Messwiderstand 44' auftretende Spannungsabfall, also eine Messspannung, erfasst werden, welche wiederum einen eindeutigen Zusammenhang mit der Temperatur des Messwiderstands 44' aufweist. Beispielsweise kann bei einer derartigen Ausgestaltung der Messwiderstand als so genannter Pt100 Platin-Widerstand ausgebildet sein, welcher insbesondere in einem Temperaturbereich bis zu etwa 800°C einen im Wesentlichen linearen, jedoch deutlichen Anstieg des elektrischen Widerstands mit der Temperatur aufweist.

Durch das Integrieren der Messstrecke 42' in den Heizleiter 12 derart, dass diese zwar in thermischem Kontakt mit diesem ist, jedoch keine elektrisch leitende Wechselwirkung mit diesem aufweist, wird der Heizleiter 12 bzw. der Heizbereich 38 desselben im Wesentlichen im gesamten Längenabschnitt zur Wärmeübertragung auf das diesen umströmende Abgas A nutzbar.

Es ist darauf hinzuweisen, dass selbstverständlich auch bei der in Fig. 4 dargestellten Ausgestaltung der Messwiderstand 44' der Messstrecke 42' eine andere Widerstandscharakteristik aufweisen könnte, beispielsweise die vorangehend mit Bezug auf die Ausgestaltungsform der Fig. 1 beschriebene PTC-Widerstandscharakteristik. Da bei dieser Ausgestaltung jedoch eine elektrische Wechselwirkung zwischen dem Messwiderstand 44' und dem Heizleiter 12 nicht besteht, könnte der Selbstregulierungseffekt aufgrund des stark ansteigenden elektrischen Widerstandes bei einem PTC-Element nicht genutzt werden. Es kann aber durch die Ansteueranordnung 66 aufgrund der Überwachung der Temperatur im Bereich der Messstrecke 42' durch entsprechende Regelmaßnahmen dafür gesorgt werden, dass die Temperatur des Heizleiters 12 eine obere Schwellentemperatur nicht übersteigt.

Bei der in Fig. 2 rechts und in Fig. 5 veranschaulichten Ausgestaltungsform eines Abgasheizers 10 umfasst die Messstrecke 42" einen Abschnitt 74 des Heizbereichs 38 des Heizleiters 12. Am Heizbereich 38 sind die Spannungsmessanschlüsse 54, 58 beispielsweise durch Anlöten oder Anschweißen der Spannungsmessleitungen 56, 60 gebildet. Da grundsätzlich, wie anhand der Kurve K₁ in Fig. 3 veranschaulicht, auch der Heizbereich 38 einen mit der Temperatur sich ändernden elektrischen Widerstand aufweist, kann durch Erfassen des Spannungsabfalls, also einer Messspannung, zwischen den beiden Spannungsmessanschlüssen 54, 58 auf den elektrischen Widerstand des Abschnitts 74 und somit dessen Temperatur geschlossen werden. Da der zwischen den Spannungsmessanschlüssen 54, 58 auftretende Spannungsabfall vom elektrischen Widerstand des Abschnitts 74 abhängt und der elektrische Widerstand des Abschnitts 74 von dessen Länge abhängt, kann es für eine möglichst genaue Erfassung der Messspannung bzw. der Variation der Messspannung vorteilhaft sein, die Spannungsmessanschlüsse 54, 58 entlang des Heizbereichs 38 möglichst weit voneinander entfernt anzuordnen. Beispielsweise könnten diese auch im Bereich der Versorgungsspannungsanschlüsse 28, 32 vorgesehen sein.

Mit dem erfindungsgemäßen Aufbau einer Abgasheizers wird die Möglichkeit geschaffen, die Temperatur im Bereich des Abgasheizers bzw. des Heizleiters desselben zu überwachten und auf einen für einen jeweiligen Betrieb einer Brennkraftmaschine und somit insbesondere auch die Abgastemperatur bzw. auch die Temperatur einer stromabwärts folgenden Abgasbehandlungseinheit besonders vorteilhaften Wert einzustellen bzw. einzuregeln. Da die Messstrecke einen als separates Bauteil bereitgestellten Messwiderstand umfasst, kann dieser mit verschiedenen Widerstandscharakteristiken aufgebaut sein. Besonders vorteilhaft ist eine PTC-Widerstandscharakteristik, da diese bei übermäßigem Temperaturanstieg einen Selbstregulierungseffekt der Heizleistung bzw. der Temperatur des Abgasheizers 10 mit sich bringt. Es können jedoch auch Messwiderstände mit anderen Widerstandscharakteristiken, beispielsweise einer NTC-Widerstandscharakteristik oder einer im Wesentlichen linearen Widerstandscharakteristik, wie diese bei Metallen im Allgemeinen vorliegt, eingesetzt werden.

## Patentansprüche

1. Abgasheizer für eine Abgasanlage für eine Brennkraftmaschine, umfassend einen Heizleiter (12) mit einem ersten Versorgungsspannungsanschluss (28), einem zweiten Versorgungsspannungsanschluss (32) und einem zwischen dem ersten Versorgungsspannungsanschluss (28) und dem zweiten Versorgungsspannungsanschluss (32) verlaufenden Heizbereich (38) , ferner umfassend eine in den Heizbereich (38) integrierte Spannungsmessstrecke (42), wobei die Spannungsmessstrecke (42) einen Messwiderstand (44) umfasst, **dadurch gekennzeichnet, dass** ein erster Anschlussbereich (46) des Messwiderstands (44) an einen zu dem ersten Versorgungsspannungsanschluss (28) führenden ersten Heizbereichsabschnitt (48) angeschlossen ist und ein zweiter Anschlussbereich (50) des Messwiderstands (44) an einen zu dem zweiten Versorgungsspannungsanschluss (32) führenden zweiten Heizbereichsabschnitt (52) angeschlossen ist, wobei der Messwiderstand (44) zu dem ersten Heizbereichsabschnitt (48) und dem zweiten Heizbereichsabschnitt (52) elektrisch seriell geschaltet ist.

2. Abgasheizer nach Anspruch 1, **dadurch gekennzeichnet, dass** ein erster Spannungsmessanschluss (54) an dem Messwiderstand (44) im Bereich des ersten Anschlussbereichs (46) gebildet ist und ein zweiter Spannungsmessanschluss (58) an dem Messwiderstand im Bereich des zweiten Anschlussbereichs gebildet ist.

3. Abgasheizer nach einem der vorangehenden Ansprüche, **dadurch gekennzeichnet, dass** die Spannungsmessstrecke (42) eine von der Widerstandscharakteristik des Heizbereichs (38) sich unterscheidende Widerstandscharakteristik aufweist.

4. Abgasheizer nach Anspruch 3, **dadurch gekennzeichnet, dass** in einem Betriebstemperaturbereich die Spannungsmessstrecke (42) einen sich stärker temperaturabhängig ändernden elektrischen Widerstand aufweist als der Heizbereich (38), oder/und dass in dem Betriebstemperaturbereich die Spannungsmessstrecke (42; 42') einen geringeren elektrischen Widerstand aufweist als der Heizbereich (38).

5. Abgasheizer nach Anspruch 3 oder 4, **dadurch gekennzeichnet, dass** die Spannungsmessstrecke (42) eine PTC-Widerstandscharakteristik oder eine NTC-Widerstandscharakteristik aufweist.

6. Abgasheizsystem für eine Abgasanlage für eine Brennkraftmaschine, umfassend wenigstens einen von Abgas (A) durchströmbaren Abgasheizer (10) nach einem der Ansprüche 1-5 und eine Ansteueranordnung (66) zum Erfassen einer Messspannung zwischen einem ersten Spannungsmessanschluss (54) und einem zweiten Spannungsmessanschluss (58) und zum Anlegen einer Versorgungsspannung zwischen dem ersten Versorgungsspannungsanschluss (28) und dem zweiten Versorgungsspannungsanschluss (32) in Abhängigkeit von der erfassten Messpannung.

7. Abgasheizsystem nach Anspruch 6, **dadurch gekennzeichnet, dass** die Ansteueranordnung (66) dazu ausgebildet ist, die zwischen dem ersten Versorgungsspannungsanschluss (28) und dem zweiten Versorgungsspannungsanschluss (32) anzulegende Versorgungsspannung in Abhängigkeit von der erfassten Messpannung und einer Soll-Messspannung oder einer Soll-Temperatur im Bereich der Messstrecke (42') anzulegen.

8. Abgasanlage für eine Brennkraftmaschine, umfassend ein Abgasheizsystem nach Anspruch 6 oder 7.

9. Verfahren zum Betreiben eines Abgasheizers nach einem der Ansprüche 1-5, vorzugsweise in einem Abgasheizsystem nach Anspruch 6 oder 7 oder in einer Abgasanlage nach Anspruch 8, umfassend die Maßnahmen:
a) Anlegen einer Versorgungsspannung zwischen dem ersten Versorgungsspannungsanschluss (28) und dem zweiten Versorgungsspannungsanschluss (32),
b) Erfassen einer Messspannung zwischen einem ersten Spannungsmessanschluss (54) der Messstrecke (42) und einem zweiten Spannungsmessanschluss (58) der Messstrecke (42),
c1) Vergleichen der bei der Maßnahme b) erfassten Messspannung mit einer Soll-Messspannung zum Ermitteln einer Spannungsabweichung zwischen der erfassten Messspannung und der Soll-Messspannung und Einstellen der Versorgungsspannung in Abhängigkeit von der Spannungsabweichung derart, dass die erfasste Messspannung im Bereich der Soll-Messspannung liegt,
oder
c2) Vergleichen einer auf der Grundlage der bei der Maßnahme b) erfassten Messspannung ermittelten Temperatur mit einer Soll-Temperatur zum Ermitteln einer Temperaturabweichung zwischen der ermittelten Temperatur und der Soll-Temperatur und Einstellen der Versorgungsspannung in Abhängigkeit von der Temperaturabweichung derart, dass die ermittelte Temperatur im Bereich der Soll-Temperatur liegt.

10. Verfahren nach Anspruch 9, **dadurch gekennzeichnet, dass** bei der Maßnahme c2) die Temperatur im Bereich der Messstrecke (42) unter Verwendung eines Messspannung-Temperatur-Zusammenhangs ermittelt wird.

11. Verfahren nach Anspruch 9 oder 10, **dadurch gekennzeichnet, dass** die Soll-Messspannung oder die Soll-Temperatur in Abhängigkeit von wenigstens einem Umgebungsparameter vorgegeben wird.

12. Verfahren nach Anspruch 11, dass eine Abgastemperatur von den Abgasheizer (10) durchströmendem Abgas (A) ein Umgebungsparameter ist.

## Claims

1. An exhaust-gas heater for an exhaust system for an internal-combustion engine, comprising a heating conductor (12) with a first supply-voltage terminal (28), with a second supply-voltage terminal (32) and with a heating region (38) extending between the first supply-voltage terminal (28) and the second supply-voltage terminal (32), further comprising a voltage-measuring section (42) integrated into the heating region (38), wherein the voltage-measuring section (42) comprises a measuring resistor (44), **characterized in that** a first terminal region (46) of the measuring resistor (44) is coupled to a first heating-region portion (48) leading to the first supply-voltage terminal (28), and a second terminal region (50) of the measuring resistor (44) is coupled to a second heating-region portion (52) leading to the second supply-voltage terminal (32), wherein the measuring resistor (44) is electrically connected in series with the first heating-region portion (48) and with the second heating-region portion (52).

2. The exhaust-gas heater as claimed in claim 1, **characterized in that** a first voltage-measuring terminal (54) is formed on the measuring resistor (44) in the region of the first terminal region (46), and a second voltage-measuring terminal (58) is formed on the measuring resistor in the region of the second terminal region.

3. The exhaust-gas heater as claimed in one of the preceding claims **characterized in that** the voltage-measuring section (42) exhibits a resistance characteristic differing from the resistance characteristic of the heating section (38).

4. The exhaust-gas heater as claimed in claim 3, **characterized in that** within an operating-temperature range the voltage-measuring section (42) exhibits an electrical resistance changing more intensely in temperature-dependent manner than the heating section (38), or/and **in that** within the operating-temperature range the voltage-measuring section (42; 42') exhibits a lower electrical resistance than the heating section (38).

5. The exhaust-gas heater as claimed in claim 3 or 4, **characterized in that** the voltage-measuring section (42) exhibits a PTC resistance characteristic or an NTC resistance characteristic.

6. An exhaust-gas heating system for an exhaust system for an internal-combustion engine, comprising at least one exhaust-gas heater (10) through which exhaust gas (A) is capable of flowing, as claimed in one of claims 1 to 5, and a control arrangement (66) for registering a measuring voltage between a first voltage-measuring terminal (54) and a second voltage-measuring terminal (58) and for applying a supply voltage between the first supply-voltage terminal (28) and the second supply-voltage terminal (32) as a function of the registered measuring voltage.

7. The exhaust-gas heating system as claimed in claim 6, **characterized in that** the control arrangement (66) is designed to apply the supply voltage to be applied between the first supply-voltage terminal (28) and the second supply-voltage terminal (32) as a function of the registered measuring voltage and a set measuring voltage or a set temperature in the region of the measuring section (42').

8. An exhaust system for an internal-combustion engine, comprising an exhaust-gas heating system as claimed in claim 6 or 7.

9. A method for operating an exhaust-gas heater as claimed in one of claims 1 to 5, preferentially in an exhaust-gas heating system as claimed in claim 6 or 7 or in an exhaust system as claimed in claim 8, comprising the following measures:
a) applying a supply voltage between the first supply-voltage terminal (28) and the second supply-voltage terminal (32),
b) registering a measuring voltage between a first voltage-measuring terminal (54) of the measuring section (42) and a second voltage-measuring terminal (58) of the measuring section (42),
c1) comparing the measuring voltage registered in the course of measure b) with a set measuring voltage for the purpose of ascertaining a voltage deviation between the registered measuring voltage and the set measuring voltage, and setting the supply voltage as a function of the voltage deviation in such a manner that the registered measuring voltage lies within the range of the set measuring voltage,
or
c2) comparing a temperature ascertained on the basis of the measuring voltage registered in the course of measure b) with a set temperature for the purpose of ascertaining a temperature deviation between the ascertained temperature and the set temperature and setting the supply voltage as a function of the temperature deviation in such a manner that the ascertained temperature lies within the range of the set temperature.

10. The method as claimed in claim 9, **characterized in that** in the course of measure c2) the temperature in the region of the measuring section (42) is ascertained by using a measuring-voltage/temperature relationship.

11. The method as claimed in claim 9 or 10, **characterized in that** the set measuring voltage or the set temperature is predetermined as a function of at least one ambient parameter.

12. The method as claimed in claim 11, **characterized in that** an exhaust-gas temperature of exhaust gas (A) flowing through the exhaust-gas heater (10) is an ambient parameter.

## Revendications

1. Chauffage de gaz d'échappement pour un système d'échappement d'un moteur à combustion interne, comprenant un conducteur de chauffage (12) avec une première borne de tension d'alimentation (28), avec une deuxième borne de tension d'alimentation (32) et avec une section de chauffage (38) s'étendant entre la première borne de tension d'alimentation (28) et la deuxième borne de tension d'alimentation (32), comprenant en outre une section de mesure de la tension (42) intégrée dans la section de chauffage (38), dans laquelle la section de mesure de la tension (42) comprend une résistance de mesure (44), **caractérisée en ce qu'**une première zone de connexion (46) de la résistance de mesure (44) est couplée à une première partie de région de chauffage (48) menant à la première borne de tension d'alimentation (28), et une deuxième zone de connexion (50) de la résistance de mesure (44) est couplée à une deuxième partie de région de chauffage (52) menant à la deuxième borne de tension d'alimentation (32), dans lequel la résistance de mesure (44) est connectée électriquement en série avec la première partie de région de chauffage (48) et avec la deuxième partie de région de chauffage (52).

2. Chauffage de gaz d'échappement selon la revendication 1, **caractérisé en ce qu'**une première borne de mesure de tension (54) est formée sur la résistance de mesure (44) dans la région de la première zone de connexion (46), et une deuxième borne de mesure de tension (58) est formée sur la résistance de mesure dans la région de la deuxième zone de connexion.

3. Chauffage de gaz d'échappement selon l'une des revendications précédentes, **caractérisé en ce que** la section de mesure de la tension (42) présente une caractéristique de résistance différente de la caractéristique de résistance de la section de chauffage (38).

4. Chauffage de gaz d'échappement selon la revendication 3, **caractérisé en ce que**, dans une plage de température de fonctionnement, la section de mesure de la tension (42) présente une résistance électrique variant plus intensément en fonction de la température que la section de chauffage (38), ou/et **en ce que**, dans la plage de température de fonctionnement, la section de mesure de la tension (42 ; 42') présente une résistance électrique inférieure à celle de la section de chauffage (38).

5. Chauffage de gaz d'échappement selon la revendication 3 ou 4, **caractérisé en ce que** la section de mesure de la tension (42) présente une caractéristique de résistance CTP ou une caractéristique de résistance CTN.

6. Système de chauffage de gaz d'échappement pour un système d'échappement d'un moteur à combustion interne, comprenant au moins un dispositif de chauffage de gaz d'échappement (10) à travers lequel les gaz d'échappement (A) peuvent s'écouler, selon l'une des revendications 1 à 5, et un dispositif de commande (66) pour enregistrer une tension de mesure entre une première borne de mesure de tension (54) et une deuxième borne de mesure de tension (58) et pour appliquer une tension d'alimentation entre la première borne de tension d'alimentation (28) et la deuxième borne de tension d'alimentation (32) en fonction de la tension de mesure enregistrée.

7. Système de chauffage de gaz d'échappement selon la revendication 6, **caractérisé en ce que** le dispositif de commande (66) est adapté pour appliquer la tension d'alimentation à appliquer entre la première borne de tension d'alimentation (28) et la deuxième borne de tension d'alimentation (32) en fonction de la tension de mesure enregistrée et d'une tension de mesure de consigne ou d'une température de consigne dans la section de mesure de la tension (42').

8. Système d'échappement pour un moteur à combustion interne, comprenant un Système de chauffage de gaz d'échappement selon la revendication 6 ou 7.

9. Méthode pour opérer un chauffage de gaz d'échappement selon l'une des revendications 1 à 5, de préférence dans un Système de chauffage de gaz d'échappement selon la revendication 6 ou 7 ou dans un système d'échappement selon la revendication 8, comprenant les mesures suivantes :
a) appliquer une tension d'alimentation entre la première borne de tension d'alimentation (28) et la deuxième borne de tension d'alimentation (32),
b) enregistrer une tension de mesure entre une première borne de mesure de tension (54) de la section de mesure (42) et une deuxième borne de mesure de tension (58) de la section de mesure (42),
c1) comparer la tension de mesure enregistrée au cours de la mesure b) avec une tension de mesure de consigne afin de déterminer un écart de tension entre la tension de mesure enregistrée et la tension de mesure de consigne, et régler la tension d'alimentation en fonction de l'écart de tension de manière à ce que la tension de mesure enregistrée se situe dans la plage de la tension de mesure de consigne,
ou
c2) en comparant une température déterminée sur la base de la tension de mesure enregistrée au cours de la mesure b) avec une température de consigne afin de déterminer un écart de température entre la température déterminée et la température de consigne, et en réglant la tension d'alimentation en fonction de l'écart de température de manière à ce que la température déterminée se situe dans la plage de la température de consigne.

10. Procédé selon la revendication 9, **caractérisé en ce que**, au cours de la mesure c2), la température dans la zone de la section de mesure (42) est déterminée à l'aide d'une relation tension de mesure/température.

11. Procédé selon la revendication 9 ou 10, **caractérisé en ce que** la tension de mesure ou la température de consigne est prédéterminée en fonction d'au moins un paramètre ambiant.

12. Procédé selon la revendication 11, dans lequel une température des gaz d'échappement (A) traversant le réchauffeur de gaz d'échappement (10) est un paramètre ambiant.
